Europäisches Patentamt

European Patent Office

Office européen des brevets

(11) Veröffentlichungsnummer: **0 050 265 B2**

(12) # NEUE EUROPÄISCHE PATENTSCHRIFT

(45) Veröffentlichungstag der neuen Patentschrift:
**29.05.91 Patentblatt 91/22**

(51) Int. Cl.⁵: **C08L 67/02**

(21) Anmeldenummer: **81107958.1**

(22) Anmeldetag: **06.10.81**

(54) **Thermoplastische Polyester-Formmassen mit verbesserter Zähigkeit.**

Die Akte enthält technische Angaben, die nach dem Eingang der Anmeldung eingereicht wurden und die nicht in dieser Patentschrift enthalten sind.

(30) Priorität: **16.10.80 DE 3039114**

(43) Veröffentlichungstag der Anmeldung:
**28.04.82 Patentblatt 82/17**

(45) Bekanntmachung des Hinweises auf die Patenterteilung:
**01.08.84 Patentblatt 84/31**

(45) Bekanntmachung des Hinweises auf die Entscheidung über den Einspruch:
**29.05.91 Patentblatt 91/22**

(84) Benannte Vertragsstaaten:
**DE FR GB IT NL**

(56) Entgegenhaltungen:
**EP-A- 0 029 931**
**EP-A- 0 029 931**
**DE-A- 2 162 485**
**DE-A- 2 256 301**
**DE-A- 2 348 377**
**DE-A- 2 523 010**
**DE-A- 2 726 256**
**FR-A- 2 354 370**
**FR-A- 2 376 181**

(56) Entgegenhaltungen:
**JP-A-53 129 246**
**US-A- 4 452 941**
**CHEMICAL ABSTRACTS, Band 89, Nr. 14, 2. Oktober 1978, Seite 75, Nr. 111231u, Columbus, Ohio, U.S.A.**
**R.J. Welgos et al: Izod Impact - Does it really Mean Impact? Society of Automotive Engineers (1976)**
**Plaste und Kautschuk, 29. Jahr, Heft 3 (1982), Seiten 178-182, K. Oberbach: Zur Aussagekraft von Stoßversuchen an Probekörpern für das Zähigkeitsverhalten von Plasteformteilen**
**Kunststoffe Bd. 68 (1978), Seiten 122-129, H.G. Dorst et al: Verstärkte Thermoplaste - Probleme und Entwicklungen**
**J.Appl.Pol.Sci., Vol. II, Issue No 6 (1959), S. 289-296, H. Keskulla et al: Anisotropy in Thermoplastic Moldings and Their Impact Strength**
**Römpps Chemie-Lexikon (7. Auflage), Seite 3660 "Triallylcyanurat"**

(73) Patentinhaber: **BAYER AG**
**W-5090 Leverkusen 1 Bayerwerk (DE)**

(72) Erfinder: **Binsack, Rudolf, Dr.**
**Bethelstrasse 4a**
**W-4150 Krefeld (DE)**
Erfinder: **Lindner, Christian, Dr.**
**Riehlerstrasse 200**
**W-5000 Koeln 60 (DE)**
Erfinder: **Rempel, Dieter, Dr.**
**Max-Beckmann-Strasse 35**
**W-5090 Leverkusen (DE)**

## Beschreibung

Die Erfindung betrifft schlagzähe Mischungen aus thermoplastischen, gesättigten Polyestern aromatischer Dicarbonsäuren und aliphatischen oder Cycloaliphatischen Diolen, sowie gepfropten Acrylaten bestimmter Zusammensetzung.

Thermoplastische Polyester haben Bedeutung erlangt auf dem Gebiet der Fasern und auf dem Gebiet der Formmassen wegen ihrer wertvollen technologischen Eigenschaften, wie z.B. Steifigkeit, Härte, Abriebfestigkeit, dynamische und thermische Belastbarkeit. Dies gilt insbesondere für die teilkristallinen thermoplastischen Polyester, wie z.B. Polyethylenterephthalat, Poly(1,4-butylenterephthalat), Poly(1,4-cyclohexylmethylenterephthalat). Ein Nachteil dieser Formmassen ist ihre in vielen Fällen nicht immer ausreichende Schlagzähigkeit bei mehraxialer Belastung.

Es existieren zahlreiche Vorschläge, die Zähigkeit thermoplastischer Polyester durch Zumischen anderer Polymerer, insbesondere solcher auf Basis modifizierter Elastomerer und Polyolefine anzuheben. Den vorgeschlagenen Massnahmen haftet jedoch der Nachteil an, dass die Zähigkeitsverbesserung mit einer wesentlichen Verschlechterung anderer, z.B. der oben genannten Eigenschaften einhergeht. Ausserdem wird auch die mehraxiale Schlagzähigkeit nicht im gewünschten Masse erreicht.

In der DE-OS 2 444 584 werden schlagfeste Formmassen mit erhöhter Oxidations- und UV-Stabilität, sowie verbessertem Schwindungsverhalten aus linearen, gesättigten Polyestern und Pfropfcopolymeren beschrieben, bei denen das Pfropfcopolymer hergestellt ist durch Pfropfung von im wesentlichen Styrol und/oder Methacrylsaureester auf ein Prepolymeres auf Basis eines Acrylats und eines Monomeren mit zwei nicht konjugierten olefinischen Doppelbindungen.

In der DE-OS 2 726 256 wird die Verbesserung der Schlagzähigkeit von Polyalkylenterephtalaten durch bestimmte mehrstufige Acrylpolymerisate beschrieben, bei denen die erste Stufe eine elastomere Stufe ist, die durch Polymerisation eines Monomersystems aus einem Alkylacrylat, einem vernetzenden Monomeren, und einem pfropfvernetzenden Monomeren erhalten wurde, sowie einer letzten harten thermoplastischen Stufe, die in Gegenwart der ersten elastomeren Stufe polymerisiert wurde.

Die genannten Druckschriften sagen nichts über die Schlagzähigkeit der beschriebenen Formmassen bei mehraxialer Belastung, obwohl dies besonders wichtig ist für die Herstellung von schlagbeanspruchten Gehäuseteilen.

Gegenstand der Erfindung sind thermoplastische Polyester-Formmassen mit verbesserter Schlagzähigkeit bei mehraxialer Belastung aus

A) 65-99, vorzugsweise 70-98, insbesondere 75-97 Gew.-%, (bezogen auf A + B) eines gesättigten Polyesters einer aromatischen Dicarbonsäure und eines aliphatischen oder cycloaliphatischen Diols, wobei der Polyester A eine Intrinsic-Viskosität von 0,5 bis 2,0 dl/g, bevorzugt 0,6 bis 1,5 dl/g, und besonders bevorzugt 0,7 bis 1,3 dl/g (gemessen in einem Gemisch aus Phenol und o-Dichlorbenzol (50/50 Gew.-%) bei 25°C im Ubbelohde-Viskosimeter) besitzt, und

B) 1-35, vorzugsweise 2-30, insbesondere 3-25 Gew.-%, (bezogen auf A + B) eines Pfropfproduktes von
I 5-55, vorzugsweise 10-40, insbesondere 15-35 Gew.-% (bezogen auf I + II) Styrol und/oder Acrylnitril und/oder Methylmethacrylat als Pfropfreis auf
II 45-95, vorzugsweise 60-90, insbesondere 65-85 Gew.-% (besogen auf I + II) eines Elastomeren als Pfropfgrundlage, erhalten durch vernetzende Copolymerisation einer Mischung aus 99,01-99,95 Gew.-% (bezogen auf II) eines Acrylesters eines $C_1$- bis $C_8$-Alkohols und 0,05-0,99 Gew.-% (bezogen auf II) eines vermetrenden Monomers dadurch gekennzeichnet, daß das vermetrende Monomer Triallylcyanurat oder Triallylisocyanurat ist und daß das Elastomer II einen mittleren Teilchendurchmesser $d_{50}$ von 0,1-1 μ und einen Gelgehalt von mindestens 60 Gew.-% hat.

Diese Formmassen besitzen hervorragende Schlagzähigkeit bei mehraxialer Belastung, selbst bei kleinen Gehalten an Pfropfprodukt B und bei relativ niedrigen Molekulargewichten des Polyesters.

Pfrofprodukte B im Sinne der Erfindung sind teilchenförmige Polymerisate, die durch wässrige Emulsionspfropfcopolymerisation eines Monomeren oder eines Monomerengemisches I in Gegenwart eines Elastomers II in den genannten Konzentrationsverhältnissen erhalten werden können.

Das Elastomer II muss ein vernetzter Acrylatkautschuk sein, insbesondere ein vernetztes Polymerisat eines Acrylesters eines $C_1$ bis $C_8$-Alkohols, oder ein entsprechendes Copolymerisat mit bis zu 40 Gew.-% enderer Vinylmonomerer, wie Styrol, Acrylnitril, Methylmethacrylat, Vinylester.

Zuden geeigneten Acrylestern zählen insbesondere Methyl-, Ethyl-, Butyl- und Hexylacrylat. Die Acrylester können entweder einzeln oder in Mischungen miteinander eingesetzt werden.

Zur Vernetzung des Elastomeren II werden polyfunktionelle Monomere copolymerisiert. Diese erfindungsgemäss zu verwendenden Monomeren sind cyclische Verbindungen, die mindestens 3 gleich schnell polymerisierende ethylenisch ungesättigte Gruppen besitzen : Triallylcyanurat oder Triallylisocyanurat.

Die Menge an vernetzenden Monomeren im Elastomer II ist relativ gering und beträgt 0,05-0,99, insbesondere 0,1-0,6 Gew.-%, bezogen auf das Elastomer II.

Der mittlere Teilchendurchmesser $d_{50}$ ist der Durchmesser, oberhalb und unterhalb dessen jeweils 50 Gew.-% der Teilchen liegen. Er kann bestimmt werden mittels Ultrazentrifugen-Messungen [W. Scholtan, H. Lange, Kolloid. Z. und Z. Polymere 250 (1972), 782-796] oder mittels Elektronenmikroskopie und anschliessende Teilchenauszählung [G. Kämpf, H. Schuster, Angew. Makromolekulare Chemie 14, (1970), 111-129] oder mittels Lichtstreuungsmessungen.

Der Gelgehalt des Elastomeren II wird bestimmt bei 25°C in Dimethylformamid (M. Hoffmann, H. Krömer, R. Kuhn, Polymeranalytik I und II, Georg Thieme Verlag Stuttgart 1977).

Das Elastomer II kann neben dem Acrylester noch andere copolymerisierbare Monomere, insbesondere Vinylmonomere, wie Styrol, Acrylnitril, Methylmethacrylat, Butylmethacrylat, Vinylester, α-Methylstyrol, Acrylamide enthalten. Der Anteil an diesen Comonomeren beträgt maximal 40 Gew.-%, bezogen auf das Elastomer II.

Die auf das Elastomer II aufzupfropfenden Monomeren I : Styrol, Arylnitril bzw. Methylmethacrylat können entweder einzeln oder auch in Gemischen aufpfropfend copolymerisiert werden. Bevorzugt werden Methylmethacrylat bzw. Gemische aus Styrol und Acrylnitril in Gewichtsverhältnissen 90 : 10 bis 50 : 50, vorzugsweise 80 : 20 bis 60 : 40, bezogen auf I, verwendet.

Die Pfropfprodukte B können erhalten werden durch wässrige Emulsionspfropfpolymerisation von

5-55, vorzugsweise 10-40, insbesondere 15-35 Gew.-% (bezogen auf I + II) Pfropfmonomer I auf

45-95, vorzugsweise 60-90, insbesondere 65-85 Gew.-% Elastomer II.

Diese Polymerisation kann wie folgt ausgeführt werden :

Zunächst werden die Monomeren des Elastomeren II in an sich bekannter Weise in Gegenwart radikalbildender Initiatoren in Emulsion polymerisiert, so dass Teilchen mit einem mittleren Teilchendurchmesser $d_{50}$ von 0, 1 bis 1 μm und einem Gelgehalt von mindestens 60 Gew.-% entstehen. Man kann das Monomerengemisch zu Beginn oder im Verlauf der Polymerisation kontinuierlich bzw. teilkontinuierlich in das Polymerisationssystem einbringen.

Nach Bildung des Latex des Elastomeren II können die Pfropfmonomeren I in den Latex eingebracht und in Emulsion copolymerisiert werden. Hierbei bilden sich die Pfropfprodukte B.

Bei dieser Pfropfcopolymerisation, die üblicherweise in Gegenwart von Radikalstartern, Emulgatoren, Komplexbildnern und Reglern durchgeführt wird, bilden sich im allgemeinen neben den eigentlichen Pfropfcopolymerisaten in bestimmten Ausmass auch freie Polymerisate oder Copolymerisate der Monomeren I. Unter Pfropfprodukten B wird daher die Summe der eigentlichen Pfropfcopolymerisate und der freien Homo- und Copolymerisate verstanden.

Die Pfropfprodukte B können nach bekannten Verfahren, z.B. durch Koagulation mit Elektrolyten und anschliessende Reinigung und Trocknung aus dem primär erhaltenen Latex isoliert werden.

Gesättigte Polyester im Sinne der Erfindung sind Kondensationsprodukte aus aromatischen Dicarbonsäuren (oder deren Derivaten) und aliphatischen oder cycloaliphatischen Diolen, insbesondere Polyalkylenterephthalate, die man aus Terephthalsäure (oder deren Derivaten) und Alkylendiolen oder Cycloalkylendiolen mit jeweils 2-10 C-Atomen nach bekannten Verfahren (s. z.B. Kunststoff-Handbuch, Bd. VIII, S. 695 ff., Carl-Hanser-Verlag, München 1973 und die dort angegebenen Literaturstellen) erhalten kann. Bevorzugte Polyalkylenterephthalate sind Polyethylenterephthalate und Poly (1,4-butylenterephthalat). Die Polyalkylenterephthalate können anstelle der Terephthalsäurekomponente auch bis zu 10 Mol-% einer anderen Dicarbonsäurekomponente (aromatische und/oder aliphatische und/oder araliphatische Dicarbonsäure), sowie anstelle der vornehmlich verwendeten Diole (Ethylenglykol bzw. Butandiol-1,4) auch bis zu 10 Mol-% anderer Diole (aromatische und/oder aliphatische und/oder araliphatische Diole) enthalten. Darüber hinaus können die thermoplastischen Polyester durch Carbonsäuren bzw. Polyole mit mehr als 2 reaktiven Gruppen verzweigt sein.

Anstelle der Homo- oder Copolyester können auch die Mischungen dieser Polyester eingesetzt werden. Bevorzugte Mischungen bestehen aus

a) 1-99, vorzugsweise 10-80, insbesondere 30-60 Gew.-% Polyethylenterephthalat und

b) 99-1, vorzugsweise 90-20, insbesondere 70-40 Gew.-% Poly(1,4-butylenterephthalat).

Die Polyester-Formmassen gemäss der vorliegenden Erfindung können übliche Additive, wie Gleit- und Entformungsmittel Nucleiermittel, Stabilisatoren, Füll- und Verstärkungsstoffe, Flammschutzmittel sowie Farbstoffe enthalten.

Die gefüllten und verstärkten Polyester-Formmassen können bis zu 60 Gew.-%, bezogen auf die Formmasse, eines Füllstoffes und/oder Verstärkungsstoffes enthalten. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid, Wollastonit.

Die erfindungsgemässen Formmassen können mit Flammschutzmitteln ausgerüstet sein und enthalten dann Flammschutzmittel in einer Menge von bis zu 30 Gew.-%, bezogen auf die Formmasse. Es kommen alle bekannten Flammschutzmittel in Frage, wie z.B. Polyhalogendiphenyl, Polyhalogendiphenylether, Polyhalogenphthalsäure und ihre Derivate und Polyhalogenpolycarbonate, wobei die entsprechenden Bromverbindungen besonders wirksam sind. Ausserdem enthalten sie in der Regel einen Synergisten, wie z.B. Antimontrioxid.

Die erfindungsgemässen Formmassen können in den üblichen Mischaggregaten wie Walzen, Kneter, Ein- und Mehrwellenextruder hergestellt werden. Besonders geeignet sind Doppelwellenextruder. Dabei kann man die beiden Komponenten A und B gemeinsam aufschmelzen und homogenisieren oder das Pfropfprodukt B in die Schmelze des Polyesters A einarbeiten. Bevorzugt arbeitet man bei Temperaturen von 10°C bis 80°C oberhalb des Schmelzpunktes des Polyesters.

Nach einem vorteilhaften Verfahren wird auf einem der genannten Mischaggregate in einem ersten Schritt eine Mischung aus 35-95, vorzugsweise 50-90 Gew.-% (bezogen auf A + B) Pfropfprodukt B und 5-65, vorzugsweise 10-50 Gew.-% (bezogen auf A + B) Polyester A hergestellt und in einem zweiten Schritt mit weiterem Polyester A zu den erfindungsgemässen Formmassen verarbeitet.

Die erfindungsgemässen Polyester-Formmassen haben schon bei niedrigen Gehalten an Pfropfprodukt B erheblich verbesserte Schlagzähigkeit bei mehraxialer Belastung auch bei Polyestern mit relativ niedrigem Molekulargewicht. Ihre Fliessnahtfestigkeit ist ausgezeichnet, ebenso ihre Wärmeformbeständigkeit und ihre Beständigkeit bei der Alterung an heisser Luft.

Entsprechend diesem Eigenschaftsbild können die erfindungsgemässen Formmassen überall zum Spritzguss und zur Extrusion eingesetzt werden, wo gute mehraxiale Zähigkeit in Kombination mit hoher Wärmeformbeständigkeit und hoher Heissluftbeständigkeit gefordert werden, z.B. zur Herstellung von Geräteteilen, die unter der Motorhaube von Kraftfahrzeugen eingesetzt werden, und von temperaturbelasteten Haushaltsgeräten.

*Beispiele*

1. Herstellung der Pfropfprodukte B
   a) Herstellung des Latex des Elastomers II

|  |  |  |  |
|---|---:|---|---|
| Lösung 1: | 1610 | Gew.-Tle. | Wasser |
|  | 3,8 | Gew.-Tle. | Emulgator[1] |
| Lösung 2: | 233 | Gew.-Tle. | n-Butylacrylat |
|  | 0,35 | Gew.-Tle. | Triallylcyanurat |
| Lösung 3: | 210 | Gew.-Tle. | Wasser |
|  | 4 | Gew.-Tle. | Kaliumpersulfat |
| Lösung 4: | 1413 | Gew.-Tle. | n-Butylacrylat |
|  | 2,35 | Gew.-Tle. | Triallylcyanurat |
| Lösung 5: | 1120 | Gew.-Tle. | Wasser |
|  | 14 | Gew.-Tle. | Emulgator[1] |
| Lösung 6: | 7700 | Gew.-Tle. | Wasser |
|  | 30 | Gew.-Tle. | Kaliumpersulfat |
| Lösung 7: | 9000 | Gew.-Tle. | n-Butylacrylat |
|  | 14,4 | Gew.-Tle. | Triallylcyanurat |
| Lösung 8: | 8500 | Gew.-Tle. | Wasser |
|  | 70 | Gew.-Tle. | Emulgator[1] |

Der Polymerisationsreaktor wird vor der Polymerisation Sauerstoff-frei gemacht. Die Lösungen 1 und 2 werden in den Reaktor eingefüllt und auf 65°C aufgeheizt. Anschliessend initiiert man durch Zugabe von Lösung 3. Im Anschluss daran werden die Lösungen 4 und 5 innerhalb von 4 Stunden in den Reaktor eindosiert. Nach Auspolymerisation bei 65°C innerhalb einer Stunde gibt man Lösung 6 in den Kessel bei 65°C und anschliessend die Lösungen 7 und 8 innerhalb von 5 Stunden. Im Anschluss daran wird 4 Stunden bei 65°C auspolymerisiert.

Es wird ein Latex erhalten, dessen Latex-Teilchengrösse 336 nm beträgt (ermittelt durch Lichtstreuungsmessungen). Das Polymerisat (Elastomer II) besitzt einen Gelgehalt (in Dimethylformamid) von 83,6 Gew.-%.

b) Herstellung der Pfropfprodukte B Pfropfprodukt, Typ C

In einem Reaktor werden vorgelegt:

1) Na-Sulfonate von $C_{14}$-$C_{18}$-Kohlenwasserstoffen

4

Lösung 9:    3544 Gew.-Tle.    des Latex von 1a
             560 Gew.-Tle.     Wasser

Nach Aufheizen auf 65C initiiert man durch Zugabe von

Lösung 10:   820 Gew.-Tle.    Wasser
             12 Gew.-Tle.      Kaliumpersulfat

Anschliessend werden folgende Lösungen innerhalb von 5 Stunden bei 65°C in den Reaktor eindosiert :

Lösung 11:   356 Gew.-Tle.     Acrylnitril
             920 Gew.-Tle.     Styrol
Lösung 12:   1600 Gew.-Tle.    Wasser
             35 Gew.-Tle.      Emulgator (s. Bei-
                               spiel 1a)

Anschliessend wird 3 Stunden bei 65°C aufpolymerisiert.
Pfropfprodukt, Typ D
In einem Reaktor werden vorgelegt :

Lösung 13:   5649 Gew.-Tle.    des Latex von 1a

Nach Aufheizen auf 65C initiiert man durch Zugabe von

Lösung 14:   800 Gew.-Tle.     Wasser
             6 Gew.-Tle.       Kaiumpersulfat

Anschliessend werden folgende Lösungen innerhalb von 5 Stunden bei 65°C in den Reaktor eindosiert :

Lösung 15:   142 Gew.-Tle.     Acrylnitril
             366 Gew.-Tle.     Styrol
Lösung 16:   870 Gew.-Tle.     Wasser
             20 Gew.-Tle.      Emulgator (s. Bei-
                               spiel 1a)

Anschliessend wird 3 Stunden bei 65C auspolymerisiert.
Die Pfropfprodukte Typ C und D werden durch Elektrolyt- und/oder Säurezusatz koaguliert. Die resultierenden Pulver werden nach dem Filtrieren bei 70°C im Vakuum getrocknet.
2. Herstellung von Vergleichs-Pfropfprodukten
Pfropfprodukt, Typ E
Copolymerisat aus n-Butylacrylat und dem Acrylsäureester des Tricyclodecenylalkohols mit Pfropfästen aus 75 Gew.-% Styrol und 25 Gew.-% Acrylnitril (nach DE-OS 2 444 584).
Pfropfprodukt, Typ F
Copolymerisat aus einer Pfropfgrundlage aus
69,45 Gew.-Tln. n-Butylacrylat
0,35 Gew.-Tln. 1,3-Butylendiacrylat
0,28 Gew.-Tln. Allylmethacrylat
und einer Pfropfhülle aus
19,95 Gew.-Tln. Methylmethacrylat
9,97 Gew.-Tln. Allylmethacrylat
(nach DE-OS 2 726 256).
3. Herstellung der Mischungen
Auf einer kontinuierlich arbeitenden Zweiwellenmaschine der Fa. Werner & Pfleiderer (Typ ZSK 32) wurden folgende Polyester aufgeschmolzen :

Typ G :    Poly(1,4-butylen-terephthalat) mit einer Intrinsic-Viskosität von 0,95 dl/g[1)]

5

EP 0 050 265 B2

Typ H : Poly(1,4-butylen-terephthalat) mit einer Intrinsic-Viskosität von 1, 15 dl/g[1]
Typ J : Polyethylenterephthalat mit einer Intrinsic-Viskosität von 0,80 dl/g[1]

Durch einen zweiten Einfüllstutzen wurde das Pfropfprodukt B in die Polyester-Schmelze eindosiert. Stickstoffbeschleierung ist zweckmässig. Das Pfropfprodukt B wurde in der Schmelze homogen dispergiert. Es kann vorteilhaft sein, die Schmelze vor dem Austritt aus der Düse zu entgasen. Die Zylinder-Temperaturen wurden so gewählt, dass eine Massetemperatur von 255°C bei Poly(1,4-butylen-terephthalat) und von 275°C bei Polyethylenterephthalat gewährleistet war. Der Schmelzstrang der Mischung aus Polyester und Pfropfprodukten wurde in Wasser abgekühlt, granuliert und getrocknet. Vom Granulat wurden auf einer üblichen Spritzgussmaschine Normkleinstäbe (nach DIN 53 453) und Platten von
3 × 60 × 60 mm bei folgenden Verarbeitungstemperaturen verspritzt :
Poly(1,4-butylen-terephthalat)-Mischung :
Massetemperatur 260°C
Formtemperatur 80°C.
Polyethylenterephthalat-Mischung :
Massetemperatur 275°C
Formtemperatur 140°C.
Gemessen wurde die Schlagzähigkeit und Kerbschlagzähigkeit (nach DIN 53 453), Kugeldruckhärte (nach DIN 53 456), Wärmeformbeständigkeit nach Vicat (nach DIN 53 460), sowie die Schlagzähigkeit bei mehraxialer Belastung im EKWA-Test (nach DIN 53 443, Blatt 2, Durchschlagung einer Platte von 3 × 60 × 60 mm mit einem Gewicht von 35 kg mit einem Durchstossdorn mit kugelförmiger Spitze, Durchmesser 20 mm, bei einer Fallhöhe von 1 m). Die Fliessnahtfestigkeit wurde im Zugversuch (nach DIN 53 455) an zweiseitig angespritzten Zustäben geprüft. Die Ergebnisse sind in der Tabelle zusammengefasst.

1) gemessen im Ubbelohde-Viskosimeter in Phenol/o-Dichlorbenzol (1 : 1 Gew.-Tle.) bei 25°C.

| Beispiele | Zusammensetzung | | | | $a_k$[1] | $H_c$[2] | Vicat B | EKWA[3]-Test | |
|---|---|---|---|---|---|---|---|---|---|
| | Polyester | | Pfropfprodukt | | | | | | Zahl der |
| | Typ | % | Typ | % | KJ/m² | MPa | °C | W.sec. | Zähbrüche % |
| 1 | G | 95 | C | 5 | 3,0 | 113 | 172 | 85 | 80 |
| 2 | G | 90 | C | 10 | 4,0 | 104 | 166 | 107 | 100 |
| 3 | G | 97 | C | 3 | 3,0 | 119 | 176 | 88 | 80 |
| 4 | G | 95 | D | 5 | 3,5 | 112 | 172 | 109 | 100 |
| 5 | G | 90 | D | 10 | 5,2 | 102 | 165 | 105 | 100 |
| 6 | G | 80 | D | 20 | 11,7 | 81 | 135 | 98 | 100 |
| 7 | G | 70 | D | 30 | 15,4 | 62 | 117 | 91 | 100 |
| 8 | H | 80 | D | 20 | 12,5 | 78 | 136 | 101 | 100 |
| 9 | J | 95 | D | 5 | 3,1 | 130 | 175 | 107 | 80 |
| 10 | J | 90 | D | 10 | 4,6 | 121 | 170 | 104 | 100 |
| Vergleichsbeispiele | | | | | | | | | |
| 11 | G | 100 | — | — | 2,3 | 123 | 182 | 15 | 0 |
| 12 | G | 95 | E | 5 | 2,5 | 108 | 171 | 32 | 20 |
| 13 | G | 95 | F | 5 | 2,6 | 109 | 172 | 37 | 30 |

Der Schlagzähigkeitstest ergab für die Proben aller Beispiele das Ergebnis «nicht gebrochen».
Die Fliessnahtfestigkeit[4] für alle Proben lag bei 100%.

[1] Kerbschlagzähigkeit
[2] Kugeldruckhärte
[3] EKWA: Elektronische Kraft/Weg-Aufnahme
[4] $\frac{\text{Reissfestigkeit mit Fliessnaht} \cdot 100}{\text{Reissfestigkeit ohne Fliessnaht}}$

## Ansprüche

1. Thermoplastische Polyester-Formmassen aus
A) 65-99 Gew.-%, (bezogen auf A + B) eines gesättigten Polyesters einer aromatischen Dicarbonsäure und einem aliphatischen oder cycloaliphatischen Diol, wobei der Polyester A eine Intrinsic-Viskosität von 0,5 bis 2,0 dl/g (gemessen in einem Gemisch aus Phenol und o-Dichlorbenzol (50/50 Gew.-%) bei 25°C im Ubbelohde-Viskosimeter) besitzt, und

6

B)1-35 Gew.-% (bezogen auf A + B) eines Pfropfproduktes von

I 5-55 Gew.-% (bezogen auf I + II) Styrol und/oder Acrylnitril und/oder Methylmethacrylat als Pfropfreis auf

II 45-95 Gew.-% (bezogen auf I + II) eines Elastomeren als Pfropfgrundlage, erhalten durch vernetzende Copolymerisation einer Mischung aus 99,01-99,95 Gew.-% (bezogen auf II) eines Acrylesters eines $C_1$- bis $C_8$-Alkohols und 0,05-0,99 Gew.-% (bezogen auf II) eines vermetrenden Monomers dadurch gekennzeichnet, daß das vermetrende Monomer Triallylcyanurat oder Triallylisocyanurat ist und daß das Elastomer II einen mittleren Teilchendurchmesser $d_{50}$ von 0,1-1 μ und einen Gelgehalt von mindestens 60 Gew.-% hat.

2. Thermoplastische Polyester-Formmassen nach Patentanspruch 1, dadurch gekennzeichnet, daß die Pfropfmonomeren I Gemische aus Styrol und Acrylnitril im Gewichtsverhältnis 90 : 10 bis 50 : 50 sind.

3. Thermoplastische Formmassen nach Patentansprüchen 1 und 2, dadurch gekennzeichnet, daß der Polyester Polyethylenterephthalat ist.

4. Thermoplastische Polyester-Formmassen nach Patentansprüchen 1 bis 3, dadurch gekennzeichnet, daß der Polyester Poly(1,4-butylen-terephthalat) ist.

5. Thermoplastische Polyester-Formmassen nach Patentansprüchen 1 bis 4, dadurch gekennzeichnet, daß die Formmassen bis zu 60 Gew.-% Glasfasern enthalten.

6. Thermoplastische Polyester-Formmassen nach Patentansprüchen 1-5, dadurch gekennzeichnet, daß der Polyester zu

a) 1 bis 99 Gew.-% aus Polyethylenterephthalat und

b) 99 bis 1 Gew.-% aus Poly(butan-1,4-diolterephthalat) besteht.


## Claims

1. Thermoplastic polyester moulding compounds of

A) 65 to 99% by weight (based on A + B) of a saturated polyester of an aromatic dicarboxylic acid and an aliphatic or cycloaliphatic diol, the polyester A having an intrinsic viscosity of 0.5 to 2.0 dl/g (as measured in a mixture of phenol and o-dichlorobenzene, 50 : 50% by weight, at 25°C in an Ubbelohde viscosimeter) and

B) 1 to 35% by weight (based on A + B) of a graft product of

I 5 to 55% by weight (based on I + II) styrene and/or acrylonitrile and/or methyl methacrylate as the graft shell on

II 45 to 95% by weight (based on I + II) of an elastomer as the graft base,

obtained by crosslinking copolymerization of a mixture of 99.01 to 99.95% by weight (based on II) of an acrylate of a $C_{1-8}$ alcohol and 0.05 to 0.99% by weight (based on II) of a crosslinking monomer, characterized in that the crosslinking monomer is triallyl cyanurate or triallyl isocyanurate and the elastomer II has an average particle diameter $d_{50}$ of 0.1 to 1 μm and a gel content of at least 60% by weight.

2. Thermoplastic polyester moulding compounds as claimed in claim 1, characterized in that the graft monomers I are mixtures of styrene and acrylonitrile in a ratio by weight of 90 : 10 to 50 : 50.

3. Thermoplastic moulding compounds as claimed in claims 1 and 2, characterized in that the polyester is polyethylene terephthalate.

4. Thermoplastic polyester moulding compounds as claimed in claims 1 to 3, characterized in that the polyester is poly-(1,4-butylene terephthalate).

5. Thermoplastic polyester moulding compounds as claimed in claims 1 to 4, characterized in that the moulding compounds contain up to 60 by weight glass fibers.

6. Thermoplastic polyester moulding compounds as claimed in claims 1 to 5, characterized in that the polyester consists of

a) 1 to 99% by weight polyethylene terephthalate and

b) 99 to 1% by weight poly-(butane-1,4-diol terephthalate).


## Revendications

1. Matières à mouler à base de polyesters thermoplastiques, formées de

A) 65-99% en poids (par rapport à A + B) d'un polyester saturé d'un acide dicarboxylique aromatique et d'un diol aliphatique ou cycloaliphatique, le polyester A ayant une viscosité intrinsèque de 0,5 à 2,0 dl/g (mesurée dans un mélange de phénol et de o-dichlorobenzène (50/50% en poids) à 25°C dans un viscosimètre Ubbelohde), et

B) 1-35% en poids (par rapport à A + B) d'un produit de greffage de

I - 5-55% en poids (par rapport à I + II) de styrène et/ou d'acrylonitrile et/ou de méthacrylate de méthyle comme greffon sur

II - 45-95% en poids (par rapport à I + II) d'un élastomère comme substrat de greffage obtenu par copolymérisation réticulante d'un mélange de 99,01-99,95% en poids (par rapport à II) d'un ester acrylique d'un alcool en $C_1$ à $C_8$ et de 0,05 à 0,99% en poids (par rapport à II) d'un monomère réticulant, caractérisées en ce que le monomère réticulant est le cyanurate de triallyle ou l'isocyanurate de triallyle et en ce que l'élastomère II a un diamètre moyen $d_{50}$ des particules de 0,1 à 1 μm et une teneur en gel d'au moins 60% en poids.

2. Matières à mouler à base de polyesters thermoplastiques suivant la revendication 1, caractérisées en ce que les monomères à greffer I sont des mélanges de styrène et d'acrylonitrile dans un rapport en poids de 90 : 10 à 50 : 50.

3. Matières à mouler thermoplastiques suivant les revendications 1 et 2, caractérisées en ce que le polyester est le téréphtalate de polyéthylène.

4. Matières à mouler à base de polyesters thermoplastiques suivant les revendications 1 à 3, caractérisées en ce que le polyester est le poly(téréphtalate de 1,4-butylène).

5. Matières à mouler à base de polyesters thermoplastiques suivant les revendications 1 à 4, caractérisées en ce qu'elles contiennent jusqu'à 60% en poids de fibres de verre.

6. Matières à mouler à base de polyesters thermoplastiques suivant les revendications 1 à 5, caractérisées en ce que le polyester est formé

a) de téréphtalate de polyéthylène en proportion de 1 à 99% en poids et

b) de poly(téréphtalate de butane-1,4-diol) en roportion de 99 à 1% en poids.